Europäisches Patentamt

European Patent Office

Office européen des brevets

(19)

(11) Numéro de publication: **0 187 569**
A1

(12) **DEMANDE DE BREVET EUROPEEN**

(21) Numéro de dépôt: 85402366.0

(22) Date de dépôt: 29.11.85

(51) Int. Cl.⁴: **B 01 D 53/34**
**F 23 J 15/00**

(30) Priorité: 07.12.84 FR 8418801

(43) Date de publication de la demande:
16.07.86 Bulletin 86/29

(84) Etats contractants désignés:
BE DE FR GB IT NL SE

(71) Demandeur: INSTITUT FRANCAIS DU PETROLE
4, Avenue de Bois-Préau
F-92502 Rueil-Malmaison(FR)

(72) Inventeur: Feugier, Alain
3, ruelle du Moulle Morainvilliers
F-78630 Orgeval(FR)

(72) Inventeur: Perthuis, Edmond
31, avenue Robert Hardouin
F-78220 Viroflay(FR)

(54) Procédé et dispositif permettant de générer de la chaleur et de réaliser une désulfuration des gaz de combustion.

(57) La présente invention concerne un procédé et un dispositif permettant de générer de l'energie thermique à partir d'un combustible et d'un comburant.

Le dispositif selon l'invention se caractérise en ce qu'il comporte en combinaison un générateur de chaleur tel une chaudière (1) et un lit circulant adiabatique (2) relié audit générateur de chaleur.

EP 0 187 569 A1

Croydon Printing Company Ltd.

./...

- 1 -

# PROCEDE ET DISPOSITIF PERMETTANT DE GENERER DE LA CHALEUR ET DE REALISER UNE DESULFURATION DES GAZ DE COMBUSTION

La présente invention concerne un procédé et un dispositif permettant de générer de la chaleur et de réaliser, notamment, une désulfuration des gaz de combustion.

Les réglementations sévères limitant dans les zones protégées les émissions d'oxydes de soufre par les effluents gazeux des générateurs de chaleur, impliquent de traiter le problème pollution suivant l'une des trois méthodes suivantes :

1) Le traitement amont des effluents gazeux par l'emploi de combustibles à faible teneur en soufre. Ce concept trouve rapidement ses limites économiques pour les combustibles commerciaux. En outre, il est du plus haut intérêt sur le plan énergétique de valoriser certains produits "hors normes" souvent très riches en soufre, tels que par exemple :
   - résidus ultimes de raffinage (asphaltes, coke de pétrole...),
   - houilles ou lignites à très fortes teneur en soufre et en cendres.

2) Le traitement in situ des effluents gazeux par injection d'un absorbant de $SO_x$ dans le milieu réactionnel en combustion. Dans les foyers traditionnels, le procédé consiste à injecter dans la flamme principalement du calcium sous forme calcaire, de dolomite ou de chaux.

Dans les chaudières à lit fluidisé à cendres sèches opérant aux environs de 800-900$^o$C, l'absorbant peut être mélangé au combustible solide. Pour une consommation donnée de calcaire, les taux de désulfuration qu'on peut obtenir dans un lit fluidisé sont nettement supérieurs à ceux qu'on obtient par injection dans une flamme de brûleur.

En particulier, au sein du lit fluidisé "rapide" ou "circulant" comportant une recirculation systématique des particules solides, il est possible de s'approcher du rapport stoechiométrique molaire Ca/S = 1 tout en maintenant un taux de désulfuration élevé : par exemple, captation de 80 à 90 % du soufre pour un rapport Ca/S de l'ordre de 1,5 contre 3 ou 4 par injection directe dans une flamme.

3) Le traitement aval par désulfuration des effluents gazeux. De nombreux procédés existent, qui opèrent en "voie humide" ou en "voie sèche". C'est actuellement la méthode la plus répandue, utilisée avec succès à partir des combustibles traditionnels employés en thermique industrielle (fuels lourds et charbons).

L'art antérieur peut être illustré par les demandes de brevets européens EP-A-0.021.558, EP-A-0.044.094, EP-A-0.105.547 ainsi que par la demande de brevet allemand DE-A-3.009.366.

Mais désulfurer les "fumées", c'est aussi traiter des gaz de combustion chargés en métaux, en produits chlorés, etc... particularités qui risquent de s'aggraver avec les types de produits évoqués en 1).

Le nouveau procédé selon l'invention pallie ces inconvénients. En outre, il est polyvalent au point de vue des combustibles et le système présente une bonne fiabilité de fonctionnement due à la robustesse des différents éléments qu'il utilise.

De plus, dans le cas où l'on utilise un ou plusieurs combustibles renfermant des métaux, ces derniers pourront être retenus dans le lit circulant.

Enfin, le dispositif et le procédé selon la présente invention qui seront précisés ci-après, se distinguent de l'art antérieur, notamment, par l'introduction de combustible dans le lit circulant. Ceci permet une grande souplesse de fonctionnement du dispositif selon l'invention. Selon le mode de réalisation préféré, le lit circulant est exempt d'échangeur de chaleur.

Ainsi, la présente invention concerne un système permettant de générer de l'énergie thermique à partir d'un combustible et d'un comburant, en limitant, notamment, les émissions d'oxydes de soufre contenus dans les effluents gazeux.

Ce système se caractérise en ce qu'il comporte en combinaison un générateur de chaleur tel une chaudière et un lit circulant adiabatique relié à ce générateur de chaleur et des moyens d'alimentation en combustible dudit lit circulant.

On entend par lit circulant adiabatique, un lit circulant dont la fonction n'est pas l'extraction d'énergie thermique. Ainsi, ce lit circulant pourra ne pas comporter d'échangeur de chaleur.

Le système selon l'invention pourra comporter un récupérateur d'énergie relié au lit circulant.

Le système selon l'invention pourra comporter un dispositif de filtration des gaz avant leur rejet final.

Il pourra également comporter un dispositif de décantation de particules, ce dispositif étant interposé entre le lit circulant et le récupérateur de chaleur.

Le système selon l'invention pourra comporter une canalisation de dérivation du lit circulant, c'est-à-dire, que cette canalisation pourra prélever une partie de l'effluent gazeux avant l'entrée du lit circulant et la réintroduire après la sortie du lit circulant. Cette canalisation pourra être équipée d'un volet réglable.

La présente invention concerne également un procédé permettant de générer l'énergie thermique à partir d'un combustible et d'un comburant en limitant, notamment, les émissions d'oxydes de soufre contenus dans les effluents gazeux. Ce procédé se caractérise en ce qu'il comporte une combustion dudit combustible avec un comburant dans un premier générateur, puis le traitement des effluents gazeux dans un lit circulant adiabatique dans lequel est introduit également du combustible. D'ailleurs, ce combustible pourra être différent de celui alimentant le premier générateur.

Le fluide moteur du lit circulant pourra être constitué pour l'essentiel de gaz provenant de la combustion se déroulant dans le premier générateur.

Les gaz sortant du lit circulant pourront être introduits dans le récupérateur d'énergie.

Les gaz sortant du récupérateur pourront être introduits dans un filtre final avant d'être rejetés dans l'atmosphère.

On ne sortira pas du cadre du procédé selon la présente invention si une partie de l'effluent gazeux est dérivé avant l'entrée du lit circulant.

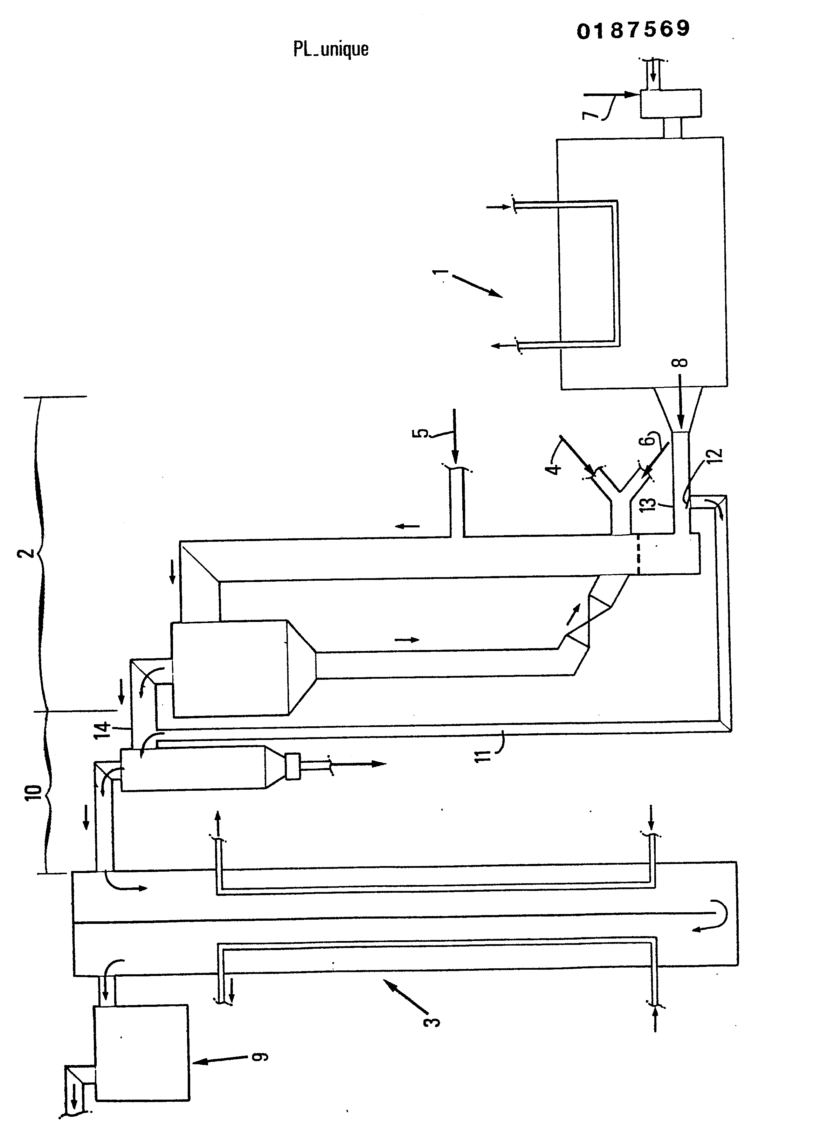

La présente invention sera mieux comprise et ses avantages apparaîtront plus clairement à la lecture de la description qui suit d'un exemple particulier, nullement limitatif, illustré par la figure unique ci-annexée.

La figure ci-jointe représente un système selon l'invention. Ce système comporte une chaudière 1, ou four, amont pouvant brûler n'importe quel type de combustible 7 soufré suivant les voies classiques de la thermique industrielle : résidu sous vide, asphalte fluxé, combustibles solides, combustibles composites fuel/charbon, suspensions charbon/eau, slurries...

Si le système, ou Unité Thermique, est destiné à la production de vapeur, la partie principale de celle-ci sera fournie par la chaudière.

La référence 2 désigne un lit circulant adiabatique dont le fluide moteur est constitué pour l'essentiel par des gaz de combustion 8, issus de la chaudière, et la charge solide par du calcaire 6 (ou éventuellement un autre désulfurant) destiné à absorber les oxydes de soufre présents dans les gaz de combustion. Cette charge solide peut être introduite dans le lit circulant par tout moyen connu.

Selon la présente invention, on entend par lit circulant adiabatique, un lit circulant ayant pour rôle essentiel de traiter les effluents gazeux issus de la chaudière sans extraction d'énergie thermique.

Toutefois, on ne sortira pas du cadre de la présente invention si l'on effectue une extraction de chaleur à caractère limité, par exemple pour récupérer les fuites thermiques qui s'échappent des parois du lit circulant adiabatique qui, bien entendu, ne peut pas être absolument adiabatique.

La nature du deuxième combustible 4, qui peut être introduit dans le lit circulant adiabatique par tout moyen connu, peut être différente de celle du combustible-chaudière. Notamment, on peut mettre à profit les particularités du lit fluidisé 2 pour valoriser un produit disponible sur place. Par exemple, si le combustible 7 de la chaudière est un asphalte fluxé, le combustible d'appoint 4 pourra être

l'asphalte solide. Dans le cadre d'une raffinerie, le combustible d'appoint 4 pourrait être un "fuel-gas", sinon un coke de pétrole. Dans tous les cas, le lit circulant n'a qu'une fonction d'organe de traitement des gaz, notamment de désulfuration des gaz, et n'intervient pas dans la fabrication de la vapeur (ou d'une manière négligeable), ce qui élimine les problèmes de tenue des faisceaux et permet de faire appel à une technologie éprouvée.

La référence 3 désigne un récupérateur aval d'énergie thermique, telle une chaudière de récupération, destiné à récupérer au mieux la chaleur sensible des gaz de combustion issus du lit 2 pour fabriquer le complément de vapeur de l'unité thermique. Il est important de noter que le fait d'avoir "désulfuré" au moins partiellement les effluents gazeux l'alimentant, permet d'épuiser au mieux leur enthalpie grâce à l'abaissement de leur température de rosée acide. En particulier, on pourra avantageusement utiliser une partie de la chaudière pour préchauffer l'air comburant du (ou des) brûleur(s) amont.

Une chaudière de récupération étant un engin thermique traditionnel disponible "sur catalogue" ne sera pas décrite dans la présente invention.

La référence 9 désigne un dispositif de filtration des gaz avant leur rejet final à l'atmosphère.

En outre, si le combustible 7 de la chaudière principale est un combustible solide cendreux, un dispositif 10 de décantation des grosses particules pourra être interposé entre le lit circulant 2 et la chaudière de récupération 3 pour éviter l'encrassement de cette dernière.

Ainsi, il apparaît que l'invention réside, notamment, dans la combinaison des différents éléments dont la technologie est connue et éprouvée dans le domaine de la thermique industrielle. Il a été

découvert que, pour limiter les consommations de calcaire, de combustible d'appoint 4 et d'air complémentaire 5, on a intérêt à alimenter le lit 2 avec des gaz ayant une température comprise entre 400 et 500°C.

Avec les techniques habituellement utilisées, la circulation efficace des produits solides dans le lit nécessite une impulsion suffisante du fluide moteur, conduisant à une perte de charge comprise entre quelque 100 et 200mbars. Il en résulte que, même en disposant un extracteur à la sortie de la chaudière aval de récupération, la chaudière amont devra être capable de supporter une surpression nécessitant une construction renforcée de l'enveloppe externe.

Compte tenu de ces remarques, l'unité thermique de production de chaleur comportera de préférence :

- un générateur amont opérant essentiellement par "rayonnement" à concurrence d'une température de sortie des gaz comprise entre 400 et 500°C, et pouvant supporter environ 200mbars ;
- un générateur aval opérant essentiellement par "convection" à concurrence d'une température de sortie des gaz compatible avec leur point de rosée acide régi par le taux de désulfuration ;
- un lit circulant désulfurant intermédiaire qui, sur le plan thermique, relève le niveau de température des gaz amont aux environs de 850°C.

La présente invention permet de conserver la souplesse de fonctionnement d'une chaudière classique en jouant sur les débits de combustible et d'air comburant alimentant le générateur amont, les conditions de fonctionnement du lit étant couplées à celles de ce dernier.

L'exemple qui suit, relatif aux performances du système selon la présente invention, est établi à partir d'un des cas les plus contraignants qu'on puisse rencontrer en matière d'utilisation de combustibles à haute teneur en soufre.

Les données générales de cet exemple sont :

- un combustible de la chaudière principale qui est en asphalte fluxé contenant 5 % de soufre,
- un combustible d'appoint qui est un asphalte solide contenant 7 % de soufre.

On s'est imposé dans cet exemple une émission de soufre finale à l'atmosphère : 864 mg/kWh (limite réglementaire en zone protégée).

Les conditions de fonctionnement chaudière amont, ou chaudière principale, sont :

- un excès d'air $e_1$ de 25 %,
- une température fumées $T_F$ de 400 ou de 500°C.

Les conditions de fonctionnement du lit circulant sont :

- un excès d'air $e_2$ de 30 %,
- une température du lit $T_L$ de 850°C (optimale) et pour la quantité de calcaire injecté soit une mole de calcium pour une mole de soufre (ce premier cas correspond à la stoechiométrie), soit 1,6 mole de calcium pour une mole de soufre (ce deuxième cas constitue la limite supérieure reconnue dans un lit circulant-désulfurant).

Les résultats de calculs sont donnés ci-dessous.

On a désigné par :

$Q_{c1}$ le débit de combustible de la chaudière principale,

$Q_{c2}$ le débit de combustible d'appoint,

$Q_{a2}$ le débit d'air frais complémentaire 5 injecté dans le lit et

par $Q_{ca}$ le débit de calcaire.

| Hypothèses / Résultats | $T_F = 400°C$ | | $T_F = 500°C$ | |
| | Ca/S = 1 (mol/mol) | Ca/S = 1,6 (mol/mol) | Ca/S = 1 (mol/mol) | Ca/S = 1,6 (mol/mol) |
|---|---|---|---|---|
| $Q_{c2}/Q_{c1}$ (kg/kg) | 0,218 | 0,228 | 0,157 | 0,165 |
| $Q_{ca}/Q_{c1}$ (kg/kg) | 0,165 | 0,268 | 0,155 | 0,249 |
| $Q_{a2}/Q_{c1}$ ($m^3N$/kg) | 0,240 | 0,370 | 0 | 0 |
| Taux désulfura-tion approx. (%) | 82 | 82 | 82 | 82 |

A titre de comparaison, il convient de signaler que l'obtention d'un taux de désulfuration de l'ordre de 80 % par injection directe de l'absorbant dans la flamme du générateur 1 (avec des astuces particulièrement délicates à mettre en oeuvre), nécessiterait de manipuler un débit de calcaire tel que $Q_{ca}/Q_{c1}$  0,450 kg/kg, tout en se limitant à l'emploi de l'sphalte fluxé, or les études économiques montrent que la consommation de produit absorbant constitue une part important du coût de la désulfuration. Ainsi, par exemple, l'injection de carbonate de calcium peut provoquer un triplement du coût lorsque le rapport Ca/S passe de 1 à 4.

On ne sortira pas du cadre de la présente invention si une partie des gaz sortant du générateur 1 est dérivée par une canalisation 11 afin de court-circuiter le lit circulant 2. Cette canalisation 11 pourra comporter un volet 12 permettant de régler le débit des gaz court-circuités. Sur la figure, la canalisation 11 relie le conduit 13 de liaison entre la sortie du générateur 1 et l'entrée du lit circulant,

et le conduit 14 de liaison entre la sortie du lit circulant et l'entrée du dispositif de décantation 10.

REVENDICATIONS

1. - Système permettant de générer de l'énergie thermique à partir d'un combustible et d'un comburant, en limitant, notamment, les émissions d'oxydes de soufre contenus dans les effluents gazeux, caractérisé en ce qu'il comporte en combinaison un générateur de chaleur tel une chaudière (1) et un lit circulant adiabatique (2) relié audit générateur de chaleur et des moyens d'alimentation en combustible dudit lit circulant.

2. - Système selon la revendication 1, caractérisé en ce qu'il comporte un récupérateur d'énergie (3) relié audit lit circulant (2).

3. - Système selon l'une des revendications 1 ou 2, caractérisé en ce qu'il comporte un dispositif de filtration (9) des gaz avant leur rejet final.

4. - Système selon la revendication 2, caractérisé en ce qu'il comporte un dispositif de décantation (10) de particules, ce dispositif étant interposé entre le lit circulant (2) et le récupérateur de chaleur (3).

5. - Système selon la revendiation 1, caractérisé en ce qu'il comporte une canalisation (11) de dérivation dudit lit circulant.

6. - Système selon la revendication 5, caractérisé en ce que ladite canalisation (11) comporte un volet réglable (12).

7. - Procédé permettant de générer l'énergie thermique à partir d'un combustible et d'un comburant, en limitant, notamment, les émissions d'oxydes de soufre contenus dans les effluents gazeux, caractérisé en ce qu'il comporte une combustion dudit combustible avec de l'air dans un premier générateur (1) puis le traitement des effluents gazeux dans

un lit circulant adiabatique (2) et en ce que l'on introduit du combustible également dans le lit circulant.

8. - Procédé selon la revendication 7, caractérisé en ce que le fluide moteur dudit lit circulant est constitué pour l'essentiel des gaz provenant de la combustion se déroulant dans le premier générateur.

9. - Procédé selon l'une des revendications 7 à 8, caractérisé en ce que les gaz sortant dudit lit circulant sont introduits dans le récupérateur d'énergie.

10. - Procédé selon la revendication 9, caractérisé en ce que les gaz sortant dudit récupérateur sont introduits dans un filtre final avant d'être rejetés dans l'atmosphère.

11. - Procédé selon la revendication 7, caractérisé en ce qu'une partie de l'effluent gazeux est dévirée avant l'entrée du lit circulant.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | EP-A-0 105 547 (METALLGESELLSCHAFT) * Page 9, paragraphe 3; figure 1; page 10, paragraphe 4 * | 1,3,4, 7,8 | B 01 D 53/34 F 23 J 15/00 |
| | --- | | |
| A | EP-A-0 044 094 (B.B.C. AG) * Figure 2; page 3, ligne 11 - page 6, ligne 25 * | 1,2,3, 7,8,10 | |
| | --- | | |
| A | EP-A-0 021 558 (ALLIS-CHALMERS) * Figure 1; page 6, ligne 7 - page 18, ligne 21 * | 1,3,7, 8 | |
| | ----- | | |

DOMAINES TECHNIQUES RECHERCHES (Int. Cl.4)

B 01 D 53/00

Le présent rapport de recherche a été établi pour toutes les revendications

| Lieu de la recherche | Date d'achèvement de la recherche | Examinateur |
|---|---|---|
| LA HAYE | 24-03-1986 | BOGAERTS M.L.M. |